# EUROPEAN PATENT APPLICATION

(11) **EP 0 833 308 A1**
(43) Date of publication of application: **01.04.1998**
(21) Application number: 96402076.2
(22) Date of filing: 30.09.1996
(51) Int. Cl.: G11B 5/55

(54) **A device for guiding an object in a translatory movement**

(71) Applicant: Deutsche Thomson Brandt, 30433 Hannover (DE)
(72) Inventor: Storz, Martin, Thomson Multimedia, 92050 Paris la Defense (FR)
(74) Representative: Zhang, Jianguo

(57) **Abstract**

The invention relates to a device for guiding an object in a translatory movement relatively to a base. The device has a symmetrical structure in relation to a plane of symmetry and comprises two members. Each member is realized out of a plate element of elastic material. A first zone on each member is connected to the base, a second zone to the object. Three different embodiments of the device according to the invention are presented.

## Description

Objects which are moved in a translatory motion comply to a condition that every point of the object is displaced along a straight line parallel to a direction of translation. A device for guiding an object during a translatory motion should thus enable a movement of the object along the direction of translation and keep the object parallel to itself at any point of its translatory motion.

The problem of guiding an object during a translatory motion may occur in various technical fields. As an example, in some optical instruments it may be important to displace optical components while preserving the direction of their optical axis. Another example is in the field of multitrack magnetic tape recorders, when a writing and/or reading head has to be displaced in a direction transverse to a tape in order to access one of a plurality of tracks supported by the tape. It may be important that an azimuth angle between the writing and/or reading head and the tracks be kept constant. Such a condition may be fulfilled by displacing the writing and/or reading head in a translatory motion along an axis of translation. This may be achieved by using a translatory guide device. Various solutions to solve the problem of translatory guide devices have been disclosed in prior art. One of such translatory guide devices shown in United States Patent 5,191,495 uses a guide rail system comprising a guide rail member fixed to a base member and a movable rail member. The movable rail member which carries a magnetic head is engaged with the fixed guide rail member to move by sliding in a translation direction. A drawback of this guide rail system is a stick-slip-effect, i.e. the movable rail member may get stuck in the fixed guide rail member.

Another translatory guide device for a magnetic head shown in United States Patent 5,379,170 comprises a motor driven lead screw which allows to lift a platform along a translation axis. A longitudinal axis of the lead screw coincides with the translation axis. A longitudinal bearing with an axis parallel to the lead screw prevents the platform from rotating around the lead screw thereby assuring a translation motion of the platform. A drawback of this device is a stick-slip-effect occurring at the contact between the longitudinal bearing and the platform. A further drawback may be seen in that the lead screw not only lifts the platform but also serves the purpose of guiding the platform in its translation motion. This requires that the lead screw and a counterpart nut in the platform be realized with a relative high mechanical precision. the manufacturing costs of this device are accordingly relatively high.

The object of the present invention is to provide a solution to the above mentioned problems for a translatory guide in which the drawback of a slip-stick-effect is minimized. Additionally it is the aim of the present invention to propose a guiding device which comprises as few as possible movable parts because such parts may regularly be subject to servicing.

A solution according to the present invention is seen in a device for guiding an object in a translatory movement along a translation axis and relatively to a base, said device having a symmetrical structure in relation to a plane of symmetry containing said translation axis. The device comprises two members, each of which is realized out of a plate element, a first zone on one member being rigidly fixed in a first predetermined distance to a counterpart first zone of the other member, a second zone on said one member being rigidly fixed in a second predetermined distance to a counterpart second zone of said other member. Said first zones are rigidly connected to said base and said second zones are used to carry said object. The device for guiding according to the invention mainly relies on an elastic deformation of the members; it does not comprise any further movable elements, nor does it comprise elements which have a friction contact between each other, hence slip-and-stick-effects are avoided.

Further advantages of the invention will become apparent from the following description taken in connection with the accompanying drawings:
Fig. 1 shows an isometric view of a device according to the invention to guide an object in a translation;
Fig. 2 shows an isometric view of an embodiment of a device according to the invention in using C-shaped members;
Fig. 3 shows an isometric view of an embodiment of a device according to the invention comprising members bent along two parallel lines respectively;
Fig. 4 shows an isometric view of the same embodiment of a device according to the invention as shown in Fig. 3 with the object to translate in a different position as in Fig. 3.

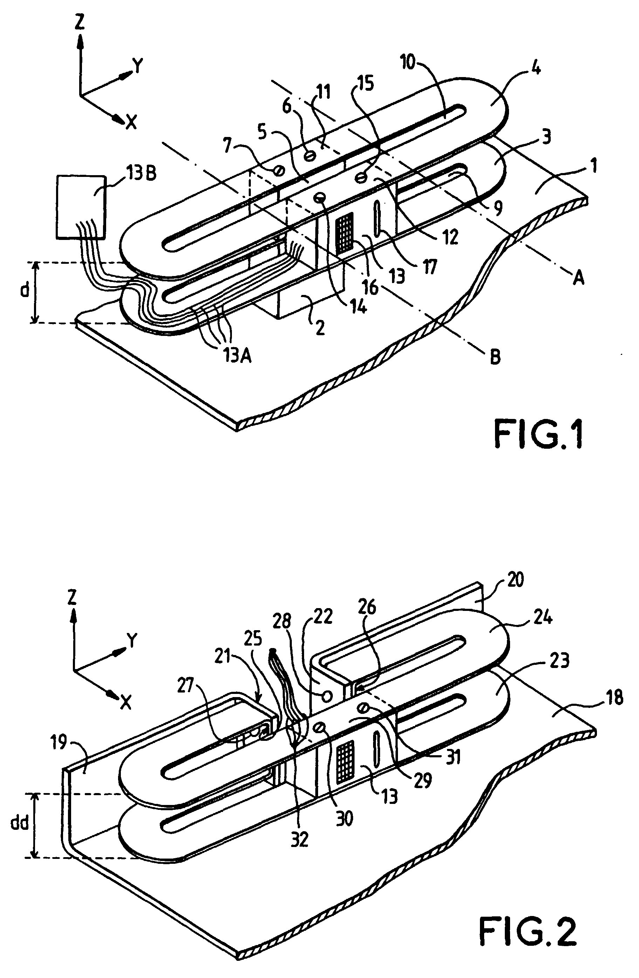

It will be understood that the above listed figures 1 to 4 and the following related description are given by way of example only and that variations and modifications can be effected within the spirit and scope of the invention.

For simplifying the explanation, the same elements are indicated with same reference numbers in figures 1 to 4.

The view shown in Fig. 1 comprises a base plate 1 on which is mounted a support block 2. The support block 2 carries two members 3 and 4 separated from each other at a predetermined distance d by a block 5. The members 3 and 4 each have a first zone, e.g. a first zone 11 of member 4 delimited by dotted lines in Fig. 1, which are in contact with the block 5. The first zone on member 3 is hidden between the block 5 and the support block 2. The members 3 and 4 and the block 5 are screwed on the support block 2 using two screws 6 and 7 and are thus each rigidly connected to the base plate 2.

The members 3 and 4 are each made out of a plate element of elastic material which is parallel to the base plate 2. The members 3 and 4 respectively comprise an opening 9 and 10 in their center and have an oblong shaped 0-structure. The device shown in Fig. 1 comprising the members 3 and 4 is symmetrical to a plane of symmetry parallel to a X-Z plane.

The members 3 and 4 each comprise a second zone, e.g. a second zone 12 of member 4 delimited by dotted lines in Fig. 1, which is used to carry an object 13 to be moved along a translation axis. The second zone of member 3 is hidden under the carried object 13. The object 13 is dimensioned such that it keeps the members 3 and 4 at the distance d from each other. The object 13 is fixed to the member 4 using screws 14 and 15. Similarly the object 13 is fixed to the member 3 using screws (not shown). The openings 9 and 10 extend over an area in the respective planes of the members 3 and 4, the area being delimited by two lines comprised in the respective plane of the members and parallel to the plane of symmetry, e.g. lines A and B in the plane of the member 4, the area comprising both the first and the second zone of the respective member, e.g. the zones 11 and 12 of member 4.

The object 13 is guided along a translation axis which is parallel to the Z-axis when a force pushing the object 13 away or towards the base plate 2 is applied (not shown). The force may be applied using devices well known in prior art.

The object 13 in Fig. 1 is a head optical unit to write and/or read on a tape in a multitrack tape recorder (not shown). The object 13 comprises on a surface a matrix 16 of active parts to write in tracks on a magnetic tape (not shown) and a magneto-optical transducer 17 to read tracks on the magnetic tape. The member 3 carries conductors 13A to connect the object 13 to an associated device 13B.

The base plate 18 shown in Fig. 2 is cut and bent such to achieve panels 19 and 20. The panels 19 and 20 are in turn cut and bent to obtain flaps 21 and 22. Two C-shaped members 23 and 24 made out of a plate element of elastic material are bent at open ends of the C-shape to obtain fixing flaps 25 and 26. The fixing flaps 25 and 26 are rigidly fixed on the flaps 21 and 22 using rivets 27 and 28. This way the C-shaped members 23 and 24 lie one above the other at a distance dd. The device as shown in Fig. 2 comprising members 23 and 24 is symmetrical to a plane of symmetry parallel to the X-Z-plane. A portion of each member 23 and 24 located respectively in the middle of the C-shape of the members 23 and 24 is used to carry an object 13. The object 13 is affixed to the member 24 using screws 30 and 31, and similarly to the member 25 using screws not shown.

The object 13 is guided along a translation axis parallel to the Z-axis when an appropriate force is applied to the object 13. Connection wires 32 to connect the object 13 to an associated device are advantageously lead between the flaps 21 and 22.

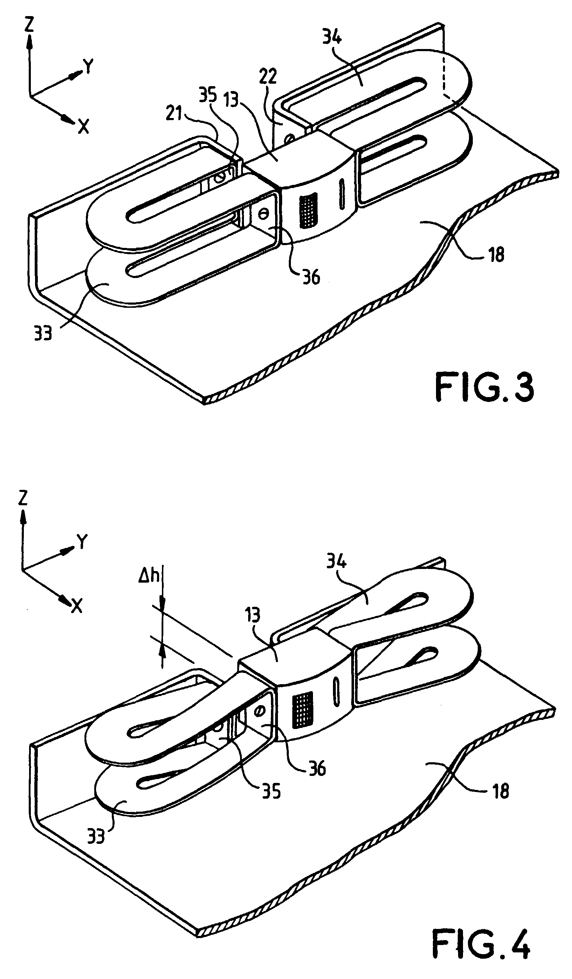

Fig. 3 shows a device according to the invention mounted on a base plate 18 similar to the base plate shown in Fig. 2. Members 33 and 34 of the translation guide device have a first portion between bents of the members 33 and 34 affixed respectively to the flaps 21 and 22 of the base plate 18, e.g. a first portion 35 of member 33 affixed to the flap 21. Second portions between bents of the members 33 and 34 (distinct from the first portions) are affixed to the object 13, e.g. the second portion 36 of member 33 is affixed to the object 13.

The members 33 and 34 are each made out of a plate element of elastic material which has an oblong O-shape and which is bent along two parallel lines as to obtain the first and the second portions. The members both have an opening which extends beyond the two parallel lines, i.e. beyond the bends to allow the translatory guide effect of the device. The device comprising the members 33 and 34 is symmetrical to a plane of symmetry having a Z-X-plane orientation. The object 13 may be guided in a translatory movement along a translation axis parallel to the Z-axis.

Fig. 4 shows the same device as in Fig. 3 to guide the object 13 along the translation axis in Z-direction. The object was displaced during a translatory movement from an initial position it had in Fig. 3 to a new position at a distance Δh of the initial position. During the translatory movement the first portions (e.g. 35) of the members 33 and 34 remain in the same position affixed to the flaps of the base plate 18. The members 33 and 34 undergo an elastic deformation as the object 13 is moved away from the initial position. The second portions (e.g. 36) of members 33 and 34 remains parallel to themselves during the translatory movement. The translatory guide device remains symmetrical to a plane of symmetry parallel to the X-Z-plane at any position the object 13 may be guided to.

The elastic material used for realizing the members 3 and 4, 23 and 24, 33 and 34 may for example be molded plastic. This allows to reduce the cost of production of such members. Additionally the insulating properties of plastic may be advantageous to carry uninsulated electrical conductors. A second example for the elastic material is spring steel. This allows to realize a high duty translatory guide device.

## Claims

1. A device for guiding an object (13) in a translatory movement along a translation axis (Z) and relatively to a base (1; 18), said device having a symmetrical structure in relation to a plane of symmetry containing said translation axis, said device comprising two members (3, 4; 23, 24; 33, 34), each of which is realized out of a plate element, a first zone (11; 25, 26; 35) on one member being rigidly fixed in a first predetermined distance to a counterpart first zone of the other member, a second zone (12; 29; 36) on said one member being rigidly fixed in a second predetermined distance to a counterpart second zone of said other member, said first zones being rigidly connected to said base and said second zones being used to carry said object.

2. A device according to claim 1 characterized in that said two members (3, 4) lie one above the other and are secant to said plane of symmetry, each of said members having an opening (9, 10) in its center, the opening extending over two parallel lines (A, B) in a plane of a corresponding member, each parallel line being on a distinct side of said plane of symmetry, said two parallel lines delimiting said first and said second zones (11, 12) of each of said members, said first and said second zones being separated by said opening.

3. A device according to claim 2 characterized in that each member has an oblong shaped O-structure.

4. A device for guiding according to either one of claims 2 or 3 characterized in that said object (13) is used to keep said second zones of said two members in said predetermined distance, said object being mounted between said two second zones.

5. A device according to claim 1 characterized in that each member (23, 24) is C-shaped and that the members lie one above the other, each member being secant to said plane of symmetry, said first zones (25, 26) of the C-shaped members being at open ends of said C-shaped members, said second zones (29) of said C-shaped members being a portion located in the middle of the C-shape members.

6. A device according to claim 1 characterized in that each member (33, 34) comprises two levels lying one above the other, each of said members having two parallel bents and an opening extending beyond both of said bents, a first portion of each of said members located between said bents corresponding to said first zone (35) of said members, a second portion between said bents corresponding to said second zone (36) of said members.

7. A device for guiding an object according to claim 6 characterized in that each of said members has an initial unbent shape of an oblong O-structure.

8. A device according to anyone of claims 1 to 7 in which said plate element is made out of elastic material.

9. A device according to claim 8 in which said elastic material is spring-steel.

10. A device according to claim 9 in which said elastic material is molded plastic.

11. A device according to either one of claims 1 to 10 characterized in that said members carry electrical conductors (13A) which provide electrical connections between said object (13) and electrical devices (13B).

12. A tape recorder and/or playback device in which a writing and/or reading head is transversely positioned in front of a tape characterized in that it comprises to guide said writing and/or reading head during its transverse positioning a device for guiding according to anyone of claims 1 to 11 in which said object to be guided is said writing and/or reading head.
